**Europäisches Patentamt**

(19) **European Patent Office**

**Office européen des brevets**

(11) Veröffentlichungsnummer: **0 062 737**
**B1**

(12) # EUROPÄISCHE PATENTSCHRIFT

(45) Veröffentlichungstag der Patentschrift:
**17.04.85**

(51) Int. Cl.⁴: **B 64 C 27/46,** F 03 D 1/06

(21) Anmeldenummer: **82100874.5**

(22) Anmeldetag: **06.02.82**

(54) **Rotorblatt oder- Bauteil und Verfahren zu dessen Herstellung.**

(30) Priorität: **10.04.81 DE 3114567**

(43) Veröffentlichungstag der Anmeldung:
**20.10.82 Patentblatt 82/42**

(45) Bekanntmachung des Hinweises auf die Patenterteilung:
**17.04.85 Patentblatt 85/16**

(84) Benannte Vertragsstaaten:
**DE FR GB SE**

(56) Entgegenhaltungen:
**EP - A - 0 019 691**
**FR - A - 1 382 031**
**FR - A - 2 304 512**
**US - A - 2 954 828**
**US - A - 4 081 220**

(73) Patentinhaber: **Messerschmitt-Bölkow-Blohm**
**Gesellschaft mit beschränkter Haftung,**
**Robert-Koch-Strasse, D-8012 Ottobrunn (DE)**

(72) Erfinder: **Hahn, Michael, Dipl.-Ing., Bahnhofstrasse 15 b,**
**D-8012 Ottobrunn (DE)**
Erfinder: **Sperber, Franz, Ing. grad.,**
**Schwarzenbergstrasse 29, D-8208 Kolbermoor (DE)**

## Beschreibung

Die Erfindung betrifft ein Rotorblatt oder -Bauteil gemäß dem Oberbegriff des Patentanspruchs 1 und ein Herstellungsverfahren hierfür.

Für die Rotorblätter sog. Großwindenergieanlagen werden u. a. aus Gründen des Leichtbaus Kunststoffe angewendet, beispielsweise für die Blattschale (Glas-)faserverstärkter Kunststoff, insbesondere Kunstharz, und für den Blattkern Hartschaumstoff, z. B. Polyvinylchlorid o. dgl. Hierbei kommt es allerdings mit zunehmender Profillänge und -tiefe des Rotorblattes zu erheblichen Schwierigkeiten im Bestreben, möglichst auf bewährte Fertigungstechniken zurückzugreifen. Das gilt nicht nur für das kostengünstige Faserwickelverfahren, welches sonst schon bei einem Aufbau eines Hubschrauberrotorblattes gemäß der DE-OS 2 611 235 für einige Faserbauteile problemlos angewendet wird. Im Grunde sind nämlich, wie im übrigen auch dieses Hubschrauberrotorblatt zeigt, die bekannten Bauweisen für Rotorblätter auf Negativformen angewiesen, was die Fertigung besonders großflächiger Rotorblätter oder einzelner Blattbauteile insbesondere bei komplizierter Oberflächengestalt äußerst teuer macht. So hat sich beispielsweise gezeigt, daß bei einer Profiltiefe des Blattflügels von 7 m die Fertigung der Blattwurzel mittels Negativform nicht mehr wirtschaftlich machbar ist, sofern jene ein vom Anschlußende zum Blattflügel hin (z. B. unter zunehmender Profiltiefe) geändertes Profil aufweisen soll.

Das durch die EP-A-19 691 bekannte, dem Oberbegriff des Anspruchs entsprechende Rotorblatt hat demgegenüber nur den Vorteil, daß einzelne Blattabschnitte miteinander über zwischengefügte sowie an den beiden Blattenden angeordnete Ankerplatten verspannbar sind. Für die einzelnen Blattabschnitte ist man aber auf herkömmliche Fertigungstechniken angewiesen.

Der Erfindung liegt daher die Aufgabe zugrunde, für ein Rotorblatt oder ein Rotorblattbauteil der im Patentanspruch 1 angegebenen Gattung einen Aufbau zu schaffen, für dessen Fertigung eine Negativform überflüssig ist. Außerdem soll ein entsprechendes Herstellungsverfahren aufgezeigt werden.

Diese Aufgabe ist zum einen gemäß dem Kennzeichen des Patentanspruchs 1 und zum anderen gemäß dem Patentanspruch 9 gelöst.

Aufgrund der Positivschablonen, aus Gründen einer einfachen Bauweise vorzugsweise den Stützkern längsunterteilende Positivschablonen des Blattprofils, ist demnach der Stützkern zum Zwecke der Formgebung des verwendeten Grundmaterials einfach als ein Drehling mit Formgebungsbegrenzungsmarkierungen handhabbar im Rahmen beispielsweise einer Schneid- und Schleifbearbeitung von auf einem rotierenden Dorn sitzenden Schaumstoffblöcken bis zu dem durch die dazwischen eingefügten Positivschablonen vorgegebenen Profil. Hierzu ist es zweckmäßig je nach Spannweite des Stützkerns in dessen Zentrum einen durchgehenden Hohlraum (für den Dorn) mit ebenen Begrenzungsflächen vorzusehen, um mit einfachen ebenflächigen Schaumstoffflächen arbeiten zu können. Die dann am Dorn jeweils zwischen zwei Positivschablonen bloß anzusetzenden Schaumstoffblöcke brauchen nur noch untereinander und mit den Positivschablonen verklebt zu werden, um den gewünschten Drehling zu erhalten. Sofern darüber hinaus eine Verstärkung des Stützkerns im Hohlraum durch eine Auskleidung aus faserverstärktem Kunststoff mit kreuzweiser Faserorientierung erforderlich wird, kann hierfür in einfacher Weise auf eine vor dem Aufsetzen der Positivschablonen und Schaumstoffblöcke im Faserwickelverfahren auf dem Dorn hergestellte Faserlaminatlage zurückgegriffen werden. Entsprechende Verstärkungs-Faserlaminatlagen an der Stützkernoberfläche lassen sich natürlich auch in üblicher Faserwickel- oder Faserlegetechnik schaffen.

Ein Ausführungsbeispiel der Erfindung wird nachfolgend näher erläutert. Hierzu zeigt die Zeichnung in

Fig. 1 eine für die Fertigung drehbar gelagerte Blattwurzel eines Rotorblattes für eine Windenergieanlage,

Fig. 2 bis 5 Querschnitte durch diese Blattwurzel an ihrem als Flügel profilierten Ende während verschiedener Verfahrensschritte der Erfindung.

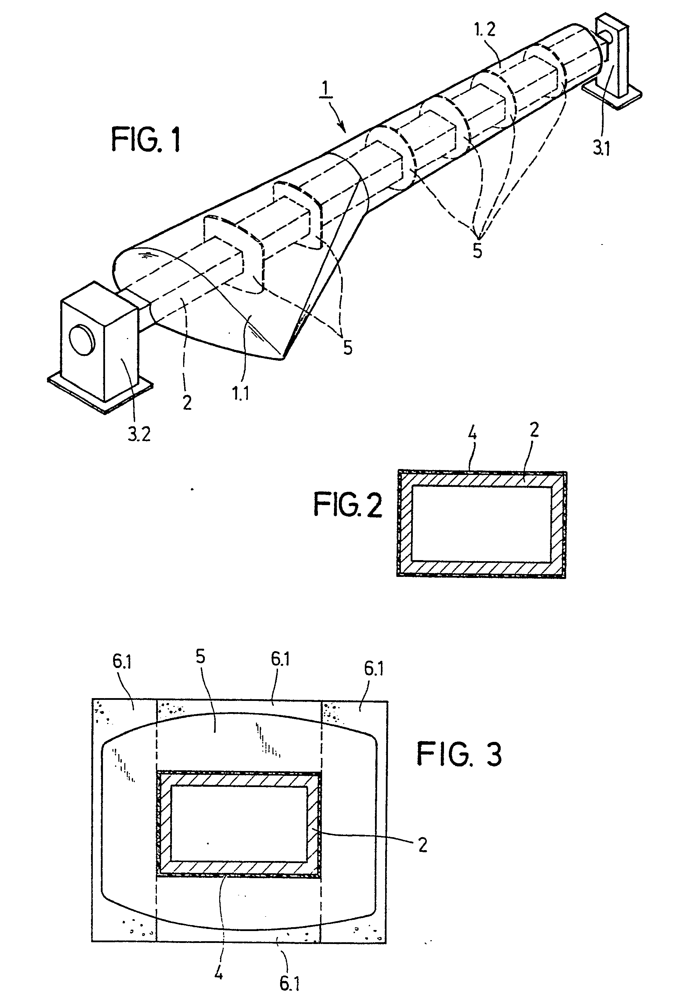

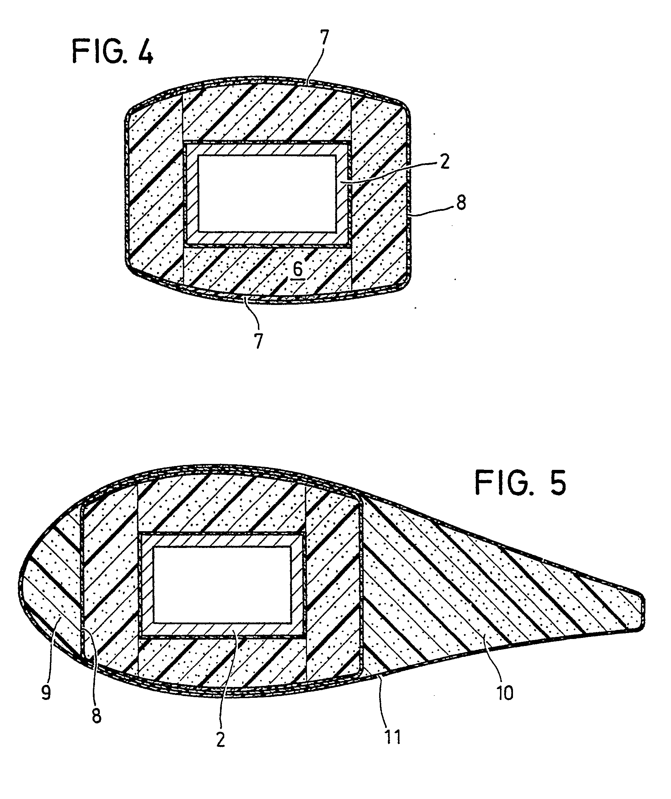

Die Blattwurzel 1 gemäß Fig. 1 kann beispielsweise bei einem Einblattrotor einer Windenergieanlage das Verbindungsstück sein zwischen einem an deren Flügelübergangsbereich 1.1 ansetzbaren Blattflügel einerseits und einem deren Schaft 1.2 zugeordneten Gegengewicht andererseits. Aus Gründen eines fertigungstechnisch einfachen Kunststoffaufbaus der Blattwurzel wird gemäß Fig. 2 zunächst auf den rechteckförmigen Dorn 2 einer — im übrigen in Fig. 1 bloß durch Lagerungs- und Antriebseinheiten 3.1, 3.2 angedeuteten üblichen — Faserwickelvorrichtung ein ±45°-Glasfaserwickellaminat 4 mit kalthärtender Harzmatrix geschaffen. Hierauf werden gemäß Fig. 1 und 3 längs des Dorns 2 in regelmäßigen Abständen scheibenförmige Positivschablonen 5 gesetzt und am Glasfaserwickellaminat 4 z. B. durch Kleben verankert. Diese Positivschablonen 5 sollen im vorliegenden Fall bloß das Blattwurzelteilprofil im Bereich eines Stützkernes 6 (Fig. 4) vorgeben, welcher gemäß Fig. 3 aus einzelnen Hartschaumstoffblöcken 6.1 zusammengesetzt ist, im Beispiel jeweils zwischen zwei Positivschablonen vier Hartschaumstoffblöcke. Sämtliche Hartschaumstoffblöcke 6.1 werden zunächst als Grobzuschnitte alle zwischengefügten Positivschablonen 5 überragen. Nach dem Verkleben der Hartschaumstoffblöcke 6.1 untereinander und mit dem Glasfaserwickellaminat 4 sowie mit den Positivschablonen 5 erhält man einen Drehling, der bzw. dessen Hartschaumstoffblöcke bis auf Schablonenhöhe zugeschnitten werden (Fig. 4). Da hierbei die Positivschablonen 5 die Formgebungsgrenzen markieren und nötigenfalls auch sichern sollen, empfiehlt es sich, für jene ein zum Schaumstoff des Stützkerns 6 vergleichsweise hartes Material zu wählen, z. B. Hartholz.

Anschließend kann man den Stützkern 6, je nach Festigkeitsanforderungen an die Blattwurzel 1, im Bandlegeverfahren an seiner Ober- und Unterseite mit je einem hochzugfesten Faserlaminat 7 aus in Kernlängsrichtung sich erstreckenden Unidirektionalfasern (z. B. Kohlefasern) versehen und dann schließlich die für die Torsionsbeanspruchung der Blattwurzel 1 nötige Schubversteifung durch eine — wie das als verstärkende Innenauskleidung dienende Glasfaserwickellaminat 4 — im Wickelverfahren aufgetragene Umhüllung 8 aus einem ±45°-Glasfaserlaminat sicherstellen (Fig. 4).

Das in Fig. 1 dargestellte vollständige Flügelübergangsprofil der Blattwurzel 1 kann gemäß Fig. 5 durch an der Kernvorder- und Kernhinterkante auf der Umhüllung 8 angesetzte (verklebte) Schaumstoff-Füllstücke 9 bzw. 10 in einer alles umschließenden Blattschale 11 erreicht werden, wobei sich selbstverständlich auch in diesen Blattwurzelbereichen eine durch Positivschablonenscheiben begrenzte Formgebung des Schaumstoffes empfiehlt. Je nach Profiltiefe der Blattwurzel 1 im Flügelübergangsbereich 1.1 wird man aber genauso gut auf solche gesondert geformten Füllstücke 9, 10 verzichten können, d. h. von vornherein in einem entsprechend tiefen Stützkernrohzuschnitt bzw. Stützkerndrehling Positivschablonen des Wurzelgesamtprofils als Formgebungsmarkierungen einbetten.

Der gewählte Aufbau der Blattwurzel 1 ist somit trotz extremer Flächenabmessungen und komplizierter Oberflächengestalt relativ einfach herstellbar. Die Blattwurzel 1 braucht schließlich bloß noch von dem Dorn 2 gezogen zu werden.

**Patentansprüche**

1. Rotorblatt oder -Bauteil (1), insbesondere Blattwurzel, mit einer schaumkerngestützten Schale (11) aus faserverstärktem Kunststoff, dadurch gekennzeichnet, daß scheibenförmige Positivschablonen (5) der Kontur des Blattgesamt- oder Blatteilprofils in Abständen mit dazwischen eingesetzten, nach dem Einsetzen auf Schablonenhöhe gekürzten Schaumstoffblöcken (6.1) in kraftschlüssigem (insbesondere Klebe-)Verbund den Stützkern (6) bilden.

2. Rotorblatt nach Anspruch 1, gekennzeichnet durch den Stützkern (6) längsunterteilende Positivschablonen (5) des Blattgesamt- oder Blatteilprofils.

3. Rotorblatt nach Anspruch 1 oder 2, dadurch gekennzeichnet, daß die Positivschablonen (5) aus einem zum Schaumstoff des Stützkerns (6) vergleichsweise harten Material bestehen.

4. Rotorblatt nach Anspruch 1, dadurch gekennzeichnet, daß der Stützkern (6) einen im Zentrum durchgehenden Hohlraum mit ebenen Begrenzungsflächen aufweist.

5. Rotorblatt nach Anspruch 4, dadurch gekennzeichnet, daß der Stützkern (6) im Hohlraum mit einer Auskleidung aus faserverstärktem Kunststoff mit kreuzweiser Faserorientierung (Glasfaserwickellaminat 4) versehen ist.

6. Rotorblatt nach Anspruch 1, dadurch gekennzeichnet, daß der Stützkern (6) an seiner Ober- und Unterseite jeweils mit einer Decklage aus faserverstärktem Kunststoff mit unidirektionaler Faserorientierung in Kernlängsrichtung (Faserlaminat 7) versehen ist.

7. Rotorblatt nach Anspruch 6, dadurch gekennzeichnet, daß der Stützkern (6) mit den Decklagen (Faserlaminat 7) von einer Umhüllung (8) aus faserverstärktem Kunststoff mit kreuzweiser Faserorientierung umschlossen ist.

8. Rotorblatt nach den Ansprüchen 1 und 7, dadurch gekennzeichnet, daß zur Vervollständigung des Blattprofils an der Kernvorder- und Kernhinterkante auf der Umhüllung (8) angesetzte (Schaumstoff-)Füllstücke (9, 10) zugleich mit der Umhüllung von der Schale (11) umschlossen sind.

9. Verfahren zur Herstellung eines Rotorblattes oder -Bauteils (1) nach einem oder mehreren der vorhergehenden Ansprüche, gekennzeichnet durch folgende Schritte:

1. Aufbringen eines Glasfaserlaminates auf einen Dorn (2),
2. Aufsetzen von scheibenförmigen Positivschablonen (5) auf den Dorn (2) in Abständen und Verankern der Positivschablonen (5) am Glasfaserlaminat (4),
3. Einsetzen von Hartschaumstoffblöcken (6.1) zwischen die Positivschablonen (5) als Grobzuschnitte,
4. Verkleben der Hartschaumstoffblöcke (6.1) miteinander, mit dem Glasfaserlaminat (4) und mit den Positivschablonen (5),
5. Zuschneiden der Hartschaumstoffblöcke (6.1) bis auf Schablonenhöhe,
6. Versehen des Stützkerns (6) mit einer Umhüllung (8) aus einem Glasfaserlaminat,
7. Abziehen des Rotorblatts oder -Bauteils (1) vom Dorn (2).

**Claims**

1. A rotor blade or component part (1), more especially a blade root, having a foam-core-supported shell (11) of fibre-reinforced plastics material, characterised in that disc-form positive templates (5) of the contour of the blade's total or blade's partial profile, spaced apart with foam material blocks (6.1), inserted therebetween and shortened after insertion to template height, in force-locking (more especially adhesive) bond, form the supporting core (6).

2. A rotor blade according to claim 1, characterised by positive templates (5) of the blade's total or blade's partial profile subdividing the supporting core (6) longitudinally.

3. A rotor blade according to claim 1 or 2, characterised in that the positive templates (5) consist of a material which is comparatively hard relative to the foam material of the supporting core (6).

4. A rotor blade according to claim 1, characterised in that the supporting core (6) has a cavity having flat boundary surfaces which extends through the centre.

5. A rotor blade according to claim 4, characterised in that the supporting core (6) is provided in the cavity with a lining of fibre-reinforced plastics material with crosswise fibre orientation (glass fibre wound laminate 4).

6. A rotor blade according to claim 1, characterised in that the supporting core (6) is provided on its upper and lower side in each case with a cover layer of fibre-reinforced plastics material with undirectional fibre orientation in the longitudinal direction of the core (fibre laminate 7).

7. A rotor blade according to claim 6, characterised in that the supporting core (6) with the cover layers (fibre laminate 7) is enclosed by a sheathing (8) of fibre-reinforced plastics material with crosswise fibre orientation.

8. A rotor blade according to claims 1 and 7, characterised in that, for the completion of the blade profile, (foam material) filler pieces (9, 10) fitted at the core front and core rear edge on the sheathing (8) are enclosed together with the sheathing by the skin (11).

9. A method of producing a rotor blade or component part (1) according to one or more of the preceding claims, characterised by the following steps:

1. Application of a glass fibre laminate to a mandrel (2),
2. Positioning of disc-shaped positive templates (5) onto the mandrel (2) at spacings and anchoring of the positive templates (5) on the glass fibre laminate (4),
3. Insertion of hard foam material blocks (6.1) between the positive templates (5) as rough blanks,
4. Adhesion of the hard foam material blocks (6.1) to one another, to the glass fibre laminate (4) and to the positive templates (5),
5. Cutting the hard foam material blocks (6.1) to template height,
6. Providing the supporting core (6) with a sheathing (8) made of glass fibre laminate, and
7. Drawing-off of the rotor blade or structural member (1) from the mandrel (2).

## Revendications

1. Pale de rotor ou élément de construction de rotor (1), en particulier pied de pale, comprenant une coque (11) en matière plastique renforcée de fibres soutenue par un noyau en produit mousse, caractérisée par le fait que des gabarits positifs (5) en forme de plaques du contour du profil total ou partiel de la pale placés à distance les uns des autres et reliés par une liaison par friction (en particulier par collage) à des blocs de mousse rigides (6.1) insérés entre eux et raccourcis après insertion à la hauteur des gabarits forment le noyau-support (6).

2. Pale de rotor selon la revendication 1, caractérisée par des gabarits positifs (5) du profil total ou partiel de la pale divisant le noyau-support (6) dans le sens longitudinal.

3. Pale de rotor selon la revendication 1 ou 2, caractérisée par le fait que les gabarits positifs (5) sont réalisés en un matériau comparativement dur par rapport au produit mousse du noyau-support (6).

4. Pale de rotor selon la revendication 1, caractérisée par le fait que le noyau-support (6) comporte au centre une cavité continue et munie de surfaces de limitation planes.

5. Pale de rotor selon la revendication 4, caractérisée par le fait que le noyau-support (6) dans la cavité comporte un revêtement en matière plastique renforcée de fibres avec orientation croisée des fibres (stratifié en fibres de verre enroulées 4).

6. Pale de rotor selon la revendication 1, caractérisée par le fait que le noyau-support (6) sur ses faces supérieure et inférieure est respectivement muni d'une couche de recouvrement en matière plastique renforcée de fibres avec orientation unidirectionnelle des fibres dans le sens longitudinal du noyau (stratifié de fibres 7).

7. Pale de rotor selon la revendication 6, caractérisée par le fait que le noyau-support (6) avec les couches de recouvrement (stratifié de fibres 7) est entouré par une enveloppe (8) en matière plastique renforcée de fibres avec orientation croisée des fibres.

8. Pale de rotor selon les revendications 1 et 7, caractérisée par le fait que, pour compléter le profil de la pale au niveau des arêtes avant et arrière du noyau, des pièces de remplissage (9,10) (produit mousse) appliquées sur l'enveloppe (8) sont entourées par la coque (11) en même temps que l'enveloppe.

9. Procédé pour la fabrication d'une pale de rotor ou d'un élément de construction de rotor (1) selon l'une ou plusieurs des revendications précédentes, caractérisé par les opérations suivantes:

1) application d'un stratifié en fibres de verre sur un mandrin (2),
2) mise en place sur le mandrin (2) de gabarits positifs (5) en forme de plaques disposés à distance les uns des autres et ancrage des gabarits positifs (5) sur le stratifié en fibres de verre (4),
3) insertion entre les gabarits positifs (5) de blocs en mousse rigide (6.1) sous forme de pièces découpées grossièrement,
4) collage des blocs en mousse rigide (6.1) entre eux, avec le stratifié en fibres de verre (4) et avec les gabarits positifs (5),

5) découpe des blocs en mousse rigide (6.1) jusqu'à la hauteur des gabarits,
6) pose sur le noyau-support (6) d'une enveloppe (8) en stratifié de fibres de verre,
7) enlèvement de la pale du rotor ou de la pièce de construction (1) du mandrin (2).

FIG. 1

1.2

1

3.1

5

5

2

1.1

3.2

FIG. 2

4

2

6.1 5 6.1 6.1

FIG. 3

2

4

6.1

FIG. 4

FIG. 5